# EUROPEAN PATENT SPECIFICATION

(11) **EP 3 875 838 B1**
(45) Date of publication and mention of the grant of the patent: **20.09.2023**
(21) Application number: 20161409.6
(22) Date of filing: 06.03.2020
(51) Int. Cl.: F21K 9/238, F21S 45/47, F21V 29/70, H01L 33/62, F21V 8/00, F21S 41/151, F21S 41/19, F21S 41/24, F21S 41/29, F21V 23/00, F21Y 107/40, F21Y 115/10, F21Y 103/10

(54) **LIGHTING DEVICE WITH LIGHT GUIDE**
BELEUCHTUNGSVORRICHTUNG MIT LICHTLEITER
DISPOSITIF D'ÉCLAIRAGE AVEC GUIDE DE LUMIÈRE

(43) Date of publication of application: 08.09.2021
(73) Proprietor: Lumileds Holding B.V., 1118 CL Schiphol (NL)
(72) Inventor: CROMPVOETS, Floris Maria Hermansz, 52066 Aachen (DE); EPMEIER, Matthias, 52064 Aachen (DE); MONESTIR, Florent, 52066 Aachen (DE)
(74) Representative: dompatent von Kreisler Selting Werner - Partnerschaft von Patent- und Rechtsanwälten mbB

(56) References cited:
- WO-A2-2009/037645
- DE-A1-102011 005 926
- JP-A- 2010 198 847
- US-A1- 2014 016 335
- US-A1- 2016 040 848
- US-A1- 2017 146 211
- US-A1- 2018 283 644
- US-A1- 2020 032 973

## Description

### FIELD OF THE INVENTION

The present disclosure relates to a lighting device comprising a carrier and a light guide for the lighting modules in applications such as automotive lighting.

### BACKGROUND OF THE INVENTION

Halogen lamps have been the default light source for many years for automotive head-lighting. However, current LED technology provides much better conversion efficiency and accurate beam pattern design possibilities. As a result, LED retrofit headlamps are seriously considered as legal replacement of halogen headlamps. Besides better energy efficiency and higher luminous flux, life-time and early mortality of LEDs headlamp are also much better.

Although the share of new cars originally equipped with full LED headlamps increases year after year, the amount of cars in use equipped with such halogen headlamps represents still more than 60% of the volume of headlamp bulbs in use. In terms of potential headlamp units replacement that means a very large potential market is available for such retrofit headlamps.

It is required that LED retrofit lamps mimic the properties of their halogen counterparts in order to deliver at least equal performance while fulfilling all legal requirements without having to change the optics of the headlamp. One key attribute is the radiation characteristic of the light emitted by such retrofits.

Due to different characteristics between halogen lamps and LEDs, it's very challenging to fit 100% of the halogen headlamps features into a LED retrofit headlamp. The main difficulty for regulation of LED retrofit is to fit the same near-field (luminance image of the light source) and far-field (intensity profile) as its halogen counterpart. On the one hand, near field has to fit the luminance of a limited filament so typically a rod of approximately 4 mm length and 1.4 mm diameter. On the other hand, far field has to fit a 360° radial distribution of a filament or at least 300° radial distribution. Taking into account the luminous flux, the light distribution and the limited space of the light emitting area, it is therefore very difficult to dissipate the heat produced by the LEDs properly. That is the reason why so far no fully legal commercial LED retrofit headlamp is available on the market.

To bypass the constraints listed above, a lot of non-legal LED retrofit headlamps have recently emerged. Those non-legal LED retrofit headlamps fulfil only a limited amount of halogen headlamps legal requirements. Typically, the requirements related to near emission field are not fulfilled and the luminous flux is strongly dimmed below the legal lumen requirement value as soon as the temperature exceeds a certain limit. Another drawback of current non-legal LED retrofit lamps is the excessive glare for given portions of the emission field which could be very dangerous e.g. for the other drivers of vehicles since they could be blinded.

With respect to the legal LED retrofit headlamps, there are not many ways to fulfil the legal radiation pattern requirement of halogen headlamps. One of the easiest ways to mimic the radiation pattern of halogen headlamps is to use e.g. multi-sided arrangements comprising one or more lighting modules. For instance, three-sided or even four-sided LED arrangements may be used, where many LEDs are connected, e.g. in serial and/or thermally. Such a multi-sided arrangement may be enabled by connecting each lighting module (e.g. a LED terminal) with the same polarity to heat sink portions having a small cross section. The respective heat sink portions may be elongated. Then, the respective heat sink portions may be electrically insulated and thermally connected.

Further, the lighting modules may be placed on a heat sink and face outwards. The main drawback of such arrangements is that if the legal requirements have to be fulfilled, problems with the thermal management arise. For instance, the light has to be emitted from a very tight volume and as the LEDs face outward only a small volume fraction remains for on the backside of the LEDs for heat conducting material. Further, it will be very challenging to insulate the conductive tracks of the LEDs from the heat sink body and in the same time to have a good thermal connection between the LEDs and the heat sink.

Furthermore, insulation between bottom pads of the LEDs and the heat sink is challenging. This is particularly difficult to realize for typical bottom contact LED packages in which electrical pads are directly in contact with the body of the heat sink.

JP 2010198847 discloses a light source of a vehicle headlight mounted on a flexible substrate, wherein a heat shield plate is arranged between the first lining member and the second lining member, and the second lining member and a heat sink are connected via the heat shield plate.

US 2017146211 discloses a lighting device including a base, a heat-conducting element, a heat-conducting column and two light-emitting components.

US 2020032973 discloses a luminous motor-vehicle module, which intends to generate a light beam that projects forward an image. The image comprises at least one horizontal row of pixels. The luminous module is arranged so that a first pixel of the horizontal row of pixels comprises a lower end and/or an upper end that are/is vertically offset with respect to a lower end and/or an upper end of a second pixel of the same row, respectively.

US 2018283644 discloses an LED lighting module with heat sink and a method to replace the LED module.

DE 102011005926 discloses a lighting device with at least one semiconductor light source arrangement which is mounted on a heat sink.

US 2016040848 discloses a vehicle lamp including a projection lens and a first light source. Light emitted from the first light source is irradiated forward through the projection lens.

WO 2009037645 discloses a LED package for use in a lamp, particularly headlight or taillight of a motor vehicle, comprising a substrate comprising an upper surface, at least one lighting element for emitting light via an emitting surface pointing away from the upper surface, wherein the lighting element comprises a LED connected to the substrate, and an optical element for guiding the emitted light.

### SUMMARY OF THE INVENTION

It is an object of the present invention to provide a lighting device having a good thermal management, in particular a lighting device wherein effective heat transport and electrical conduction is provided while it is capable of fulfilling the legal requirements, in particular with respect to having the same near-field and far-field as a halogen counterpart.

According to a first aspect of the present invention, the object is solved in that a lighting device is proposed, the lighting device comprising: a carrier for at least one lighting module comprising at least one mounting portion for receiving of at least one structure, wherein the carrier has a triangular cross section at least in sections with the at least one mounting portion being arranged on an edge of the triangular cross section; and a heat sink body portion arranged adjacent to the at least one mounting portion, wherein the heat sink body portion protrudes sidewards from the at least one mounting portion; and wherein the at least one structure is mounted to the at least one mounting portion, wherein the at least one structure comprises at least one mounting face for receiving the at least one lighting module, wherein the at least one mounting face has an arrangement direction and is configured for the at least one lighting module to be arranged along the arrangement direction; the at least one lighting module being mounted along the arrangement direction on the at least one mounting face; and at least one light guide being optically coupled to the at least one lighting module, wherein the at least one structure has at least partly a concave or inwardly recessed cross section, wherein the at least one mounting face corresponds at least partly to a surface area of the at least one structure having the concave or inwardly recessed cross section, and at least two lighting modules are mounted on the at least one mounting face at least partly facing each other..

According to a second aspect of the present invention, a method for producing the lighting device according to the first aspect is provided, the method comprising: providing the carrier for the at least one lighting module comprising the at least one mounting portion for receiving of the at least one structure, wherein the carrier has a triangular cross section at least in sections with the at least one mounting portion being arranged on the edge of the triangular cross section; and the heat sink body portion arranged adjacent to the at least one mounting portion, wherein the heat sink body portion protrudes sidewards from the at least one mounting portion; forming or mounting the at least one structure to the at least one mounting portion of the carrier, wherein the at least one structure comprises the at least one mounting face and is thermally coupled to the at least one mounting portion; mounting the at least one lighting module along the arrangement direction of the at least one mounting face to the at least one structure; and optically coupling the at least one light guide to the at least one lighting module.

According to a third aspect of the present invention, an automotive exterior light, automotive interior light or aerospace interior or exterior light is proposed comprising the inventive lighting device.

Exemplary embodiments of the first, second and third aspect of the invention may have one or more of the properties described below.

A carrier for at least one lighting module is provided comprising at least one mounting portion for receiving of at least one structure. The carrier has a triangular cross section at least in sections with the at least one mounting portion being arranged on an edge of the triangular cross section. Exemplary, the triangular cross section has an opening angle of 0° to 90°, in particular of at least 30° to 65°, preferably 58°. For applications with greater heat generation requiring a greater heat transfer from the mounting portion to the heat sink body portion, opening angles in particular about 58° have been found to be preferred. It is tolerated that no light is radiated in the angular range corresponding to the back lead wire of halogen lamps. It is foreseen that for a plane orthogonal to the longitudinal axis of an automotive headlamp the minimum luminous intensity will be defined starting from the so-called C₃₀-plane. For instance, a triangular cross section having an opening of at least 30° enables that no light has to be emitted for an angular region between -29° to +29°. The triangular cross section may be in such a way capable to provide enough heat dissipation away from the lighting module while at the same time the legal requirements can be met.

The heat sink body portion is arranged adjacent to the mounting portion, wherein in particular the heat sink body portion is in thermal contact to the mounting portion, such that heat generated by one or more lighting modules mounted on the respective mounting face(s) can be transferred from the mounting portion to the heat sink body portion. The heat sink body portion may in particular comprise a volume and/or surface configured to provide heat dissipation suitable for the heat generated by the lighting module(s) and to provide cooling for the lighting module(s). The heat sink body portion may be a truncated heat sink body portion (e.g. in the form of a nose). In this case shadowing LED light radiation over an angular range of 59° is within regulation requirements for the LED retrofit headlamp, in particular for automotive lighting appliances. Such a truncated heat sink body portion may be used to support the lighting module and to transport the heat as well.

"Protruding sidewards" may in particular be understood in that when a viewer faces a respective mounting surface, for instance in a direction perpendicular to the mounting face, the heat sink body portion extends at least beyond one side edge of the mounting face. For instance, the heat sink body portion may protrude sidewards relative to the arrangement direction in that the heat sink body portion extends beyond at least one side edge of the mounting face. The heat sink body portion may extend substantially parallel to the arrangement direction.

At least one structure to be mounted to the at least one mounting face is at least thermally coupled to the at least one mounting portion of the carrier. Alternatively, the at least one structure may also be formed, e.g. integrally with the at least one mounting portion. In both alternatives, the at least one structure is thermally coupled to the at least one mounting portion so that heat can be dissipated away from the mounting portion, in which the lighting module is mounted along the arrangement direction of the mounting face. The mounting face may provide a suitable mounting surface for one or more lighting modules. For instance, the mounting face may be at least partially flat or planar to provide an area suitable to accommodate the lighting module(s), such as LED die(s).

The mounting face may have an arrangement direction that is configured for accommodating the lighting module(s) arranged along the arrangement direction. The arrangement direction may correspond to an extension direction of the respective mounting face and/or of the lighting module(s). For instance, the arrangement direction may correspond to a longest dimension of the respective mounting face and/or of lighting module(s). The mounting face may in particular be configured such that multiple (e.g. at least two) lighting modules, e.g. in form of a lighting module package, may be arranged along a line, e.g. a straight line, wherein the arrangement direction may correspond to the orientation of the line of lighting modules.

The lighting module(s) may in particular comprise at least one semiconductor element capable of light emission. In particular, the lighting module may comprise at least one LED (Light Emitting Diode). For instance, the LEDs may be provided in form of separate or combined LED dies and/or LED packages, wherein in particular the LED may be arranged on a substrate, e.g. a sapphire substrate. An LED package may comprise a wavelength conversion element (e.g. based on phosphor) and/or may comprise at least one optical element such as a diffusing layer, a diffractive element (e.g. a lens) and/or a reflective element (e.g. a reflector cup). The LED or LEDs may for instance be integrated into a LED lead frame. The lighting module(s) is (are) preferably mounted along the arrangement direction of the at least one mounting face to the at least one structure. The at least one lighting module may be soldered to the at least one structure.

At least one light guide is optically coupled to the at least one lighting module. A light guide can carry light over a distance via a particular route to a defined light-emitting surface, e.g. with minimal loss. The radiation characteristic of the light emitted from the light guide can hence be precisely controlled to e.g. fulfil the legal requirements. To this end, a suitable transmittance and/or reflectivity of the surfaces of the at least one light guide is adjusted. The light guide can be manufactured from any suitable optically transparent material. The light-emitting surface of the at least one light guide is preferably not larger than 4 mm x 1.4 mm.

The light guide may be aligned to the at least one lighting module by placing the light guide inside a three sided cavity of the mounting portion of the carrier.

According to the present invention, the at least one structure has at least partly a concave or inwardly recessed cross section, wherein the at least one mounting face corresponds at least partly to the surface area of the at least one structure having the concave or inwardly recessed cross section, and at least two lighting modules are mounted on the at least one mounting face at least partly facing each other.

Under "facing each other", it is understood that the light emitting surfaces of the at least two lighting modules face each other so that at least a part of the light emitted by the at least two lighting modules is directed into the same volume fraction. A minimum of crosstalk may be caused, e.g. light from one of the at least two lighting modules overlaps with light from the other of the at least two lighting modules.

Contrary to the inward alignment as described above, in this way at least two lighting modules can face at least partly outwards. The angle between the light-emitting sides of the lighting modules can be chosen such that crosstalk between the lighting modules is minimized while as much light as possible is directed inwards. Further, by mounting the at least two lighting modules at least partly at the inwardly recessed or concave surface of the at least one structure, more lighting modules can be mounted, allowing for a larger primary light output and hence a larger luminous flux.

The light emitted by the at least two lighting modules is redirected via the at least one light guide to achieve the legally required emission pattern. Advantageously, the light guide can be replaced by a different light guide to fulfil e.g. legal requirements of different jurisdictions, without the need to redesign the whole lighting device.

As the lighting modules face at least partly inwards, a large volume fraction is available on the backside of the lighting modules for heat conducting material as well as for insulating the conductive tracks of the lighting modules from the heat sink body. For instance, the width of the at least one structure perpendicular to the arrangement direction can be increased by a factor of at least 40% or 50% compared to the conventional outward facing arrangement without impairing the fulfilment of the legal requirements. The corresponding gain in volume can be used for heat sink or heat conduction material, leading to a better thermal management, and/or it can e.g. be used to drive fewer lighting modules at higher currents. According to the present invention, the at least one structure has at least partly a concave or inwardly recessed cross section perpendicular to the arrangement direction.

The at least one structure may further comprise at least two, preferably five or more heat fingers electrically insulated against each other. At least one heat finger may be connected to the pads of in maximum two LED dies, if those pads are in an electrical connection, e.g. if LEDs are in a series connection. The at least two heat fingers are preferably glued together using e.g. a silicone glue to provide electrical insulation. More preferably the at least two heat fingers may be surrounded by a silicone layer to prevent electrical shortcuts via the heat sink. Above disclosed multi-sided arrangement may be used so that at least two of such heat fingers are enabled. In this way, e.g. there may be only a single mounting portion and this mounting portion does not need to be electrically insulated from the heat sink since it is not electrically conductive.

According to an exemplary embodiment of the invention, the at least two lighting modules are mounted on the at least one mounting face enclosing an angle of at least 30° and/or at most 135° between the planes defined by their respective top surfaces. These angle ranges allow on the one hand for a minimization of crosstalk between the at least two lighting modules and on the other hand a maximization of the increase in volume fraction available for heat dissipation. Preferably, the angle is at least 90° to minimize cross talk. Further preferably, the angle is at most 100°.

According to an exemplary embodiment of the invention, the at least one light guide has at least two scattering side surfaces which are configured to cause at least 90% diffuse scattering of incoming light and/or at least two transmissive side surfaces which are configured to allow at least 70% transmission of incoming light. According to an exemplary embodiment of the method according to the second aspect, the at least two scattering surfaces on the at least one light guide are formed or created by means of sand blasting, roughening, or scatter coating using e.g. TiO₂ (Titanium Dioxide) e.g. in a proper matrix material (e.g. silicone).

Preferably, the at least two transmissive side surfaces are configured to allow at least 75% transmission of incoming light and/or the at least two scattering side surfaces are configured to cause at least 95% diffuse scattering of incoming light, e.g. in a Lambertian fashion. This allows for an optimal redirection of the light emitted by the at least one lighting module in the at least one light guide to achieve the legally required emission pattern, in particular the near field luminance. This can be achieved even more effectively when the at least two transmissive side surfaces are placed essentially perpendicular to the at least two scattering side surfaces. According to an exemplary embodiment of the method, the at least two transmissive side surfaces are produced by (e.g. multilayer) dielectric coating or a metal, e.g. aluminium or silver, coating.

The at least two scattering side surfaces may be arranged parallel to the arrangement direction. Preferably the at least two scattering side surfaces are configured to cause at least in parts partial reflection of incoming light causing at least partly a reflection of light back into the light guide so that light can be redirected with less intensity losses. Light emitted by the at least one lighting module in this way may propagate almost isotopically transverse to the arrangement direction. Having scattering side surfaces with partial reflection along the arrangement direction allows to achieve the legally required emission pattern, in particular the far field particularly good. However, the partial reflectivity of the respective side surfaces in this case has to be below 100% to achieve good results. The partial reflectivity may be between 20% to 30%, preferably 25% reflection and, thus, transmission may be between 80% to 70%, preferably 75%. These ranges may ignore absorption that can happen in addition.

Alternatively to or in combination with the at least two scattering side surfaces, the material of the at least one light guide may be configured to cause volume scattering. The at least two transmissive side surfaces are preferably arranged perpendicular to the arrangement direction so that the light emitted by the at least one lighting module is optimally distributed in forward and backward direction along the arrangement direction.

According to an exemplary embodiment of the invention, the at least one light guide has at least one top surface, wherein the at least one top surface has at least partly a parabolic cylinder shape with respect to the arrangement direction. When the light guide is optically coupled to the lighting module(s) the top surface may in particular be situated essentially facing away from the structure or essentially opposite of the lighting module(s). The light guide has preferably at least partly a parabolic cross section perpendicular to the arrangement direction allowing for a particularly good fulfilment of the legal far-field requirements. The top surface may for instance comprise a single parabolic cylinder shape. Alternatively, the top surface of the light guide may comprise two parabolic cylinder shaped parts and a flat part arranged between the two parabolic cylinder shaped parts. The at least one top surface of the at least one light guide may be formed as a scattering surface in particular by structuring e.g. by means of sand blasting, roughening, or scatter coating. The at least one top surface may in particular have the optical characteristics described for the at least two scattering side surfaces.

The light guide may further have at least one bottom surface, which at least partly faces the at least one lighting module. The at least one bottom surface of the at least one light guide may be flat, e.g. in the case where only one lighting module is mounted to the at least one structure. The at least one bottom surface may also have a shape resulting from the bottom part of the at least one light guide resembling a polygon so that respective sides of the polygonal shape face an respective on of at least two lighting modules. In the case of at least two lighting modules mounted along the arrangement direction on two mounting faces of the at least one carrier, the bottom part of the light guide may be formed as a wedge enclosing an angle of around 90°.

According to an exemplary embodiment of the invention, the at least one light guide has at least one extension for aligning the at least light guide to the structure. The at least one extension may have at least partly a V-shape, with the at least one carrier having a respective matching inverse V-shape, such that alignment of the at least one light guide is enhanced. The at least one extension may be integrally attached to or formed with the light guide or may be a separate part attached to the light guide, e.g. by means of screwing or gluing.

According to an exemplary embodiment of the method, the at least one light guide is fixed to the carrier at least partly by means of the at least one extension. For example, at least one clamping device is formed in the at least one carrier or a separate clamping device is attached to the at least one carrier, such that the at least one clamping device can clamp the at least one extension, such that a mechanical connection between the at least one light guide and the at least one structure may be provided. A clamping device may for instance be formed from a metal sheet, in particular a metal sheet of 100 to 400µm, or in particular 300µm thickness. Preferably, the at least one clamping device or formed metal sheet conforms to the shape of the at least one carrier or heat-sink nose to avoid shadowing effects. The at least one clamping device may be mechanically connected to the at least one carrier, e.g. by means of clamping. A firmer attachment of the clamping device to the at least one carrier can be accomplished by introducing at least one recess into the surface of the at least one carrier with the at least one clamping device having at least one corresponding extrusion or vice versa. Also, dents may be applied preferably to the bottom side of the at least one carrier, the bottom side being located essentially opposite to the at least one mounting face. Other attachments of the at least one clamping device or formed metal sheet to the at least one carrier, e.g. the heat-sink nose, like screwing, riveting or hot stacking are also possible.

According to a preferred embodiment of the method, the at least one clamping device is produced by forming said at least one metal sheet after the light guide is optically coupled to the at least one lighting module, e.g. by bending the at least one metal sheet in several steps, in particular around the at least one carrier and an at least one light guide extension, until the at least one light guide is fixed.

According to an exemplary embodiment of the invention, the at least one light guide comprises or consists of glass or silicone. These materials allow for an optimal light propagation in the light guide.

According to an exemplary embodiment of the invention, at least one air gap is present between the at least one light guide and the at least one lighting module. This configuration allows for improved optical efficiency. In the case the lighting module(s) comprise(s) an optical converter configured to change the wave length of the light emitted e.g. by an LED, the at least one air gap is present between the top surface of the optical converter, e.g. a phosphor converter, and the at least one light guide.

According to an exemplary embodiment of the invention, the at least one structure comprises a ceramic substrate (e.g. a wafer) for receiving the at least one lighting module, the ceramic substrate comprising on at least one side a routing layer for electrically coupling of the at least one lighting module. The respective routing layer(s) provide e.g. one or more contact sections so that lighting module(s) can be mounted to the contact section(s). The respective routing layer(s) may be made out of copper. To manufacture such a ceramic substrate, e.g. the routing layer is formed, e.g. by patterning (e.g. printing, or chemical etching) such copper routing layer(s) on the surface of a ceramic wafer. The structure may be formed by a ceramic substrate thermally coupled to the at least one mounting portion. The ceramic substrate may be a monolithic ceramic tile. The ceramic substrate is non-conductive. The ceramic substrate may have a rectangular cross-section. The ceramic substrate may be an AlN (Aluminium Nitride) substrate.

The lighting device according to example embodiments of the invention may in particular be configured for a use in automotive lighting, e.g. as part of an automotive head light, automotive exterior light, automotive interior light or aerospace interior or exterior light. The lighting device may in particular be used for appliance in automotive head lamps.

It is to be understood that the presentation of embodiments of the invention is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

Examples of the invention will now be described in detail with reference to the accompanying drawing, in which:
- Fig. 1a: shows a schematic representation of an embodiment of a carrier in a perspective view;
- Fig. 1b: shows the embodiment of Fig. 1a in a schematic front view;
- Fig. 2a: shows a schematic representation of a structure to be mounted to a lighting device not covered by the claims in a perspective view;
- Fig. 2b: shows the schematic representation of Fig 2a in a schematic side view;
- Fig. 3a: shows a schematic representation of an embodiment of a light guide in a perspective view;
- Fig. 3b: shows a schematic representation of another embodiment of a light guide in a perspective view;
- Fig. 3c: shows a schematic representation of a further embodiment of a light guide in a perspective view;
- Fig. 4a: shows a schematic representation of an embodiment of a lighting device not covered by the claims in a perspective view;
- Fig. 4b: shows a schematic representation of another embodiment of a lighting device in a perspective view;
- Fig. 5a-c: show schematically the method of production of an embodiment of a lighting device not covered by the claims in perspective views; and
- Fig. 6: shows a schematic representation of a structure having five heat fingers.

### DETAILED DESCRIPTION OF THE EMBODIMENTS

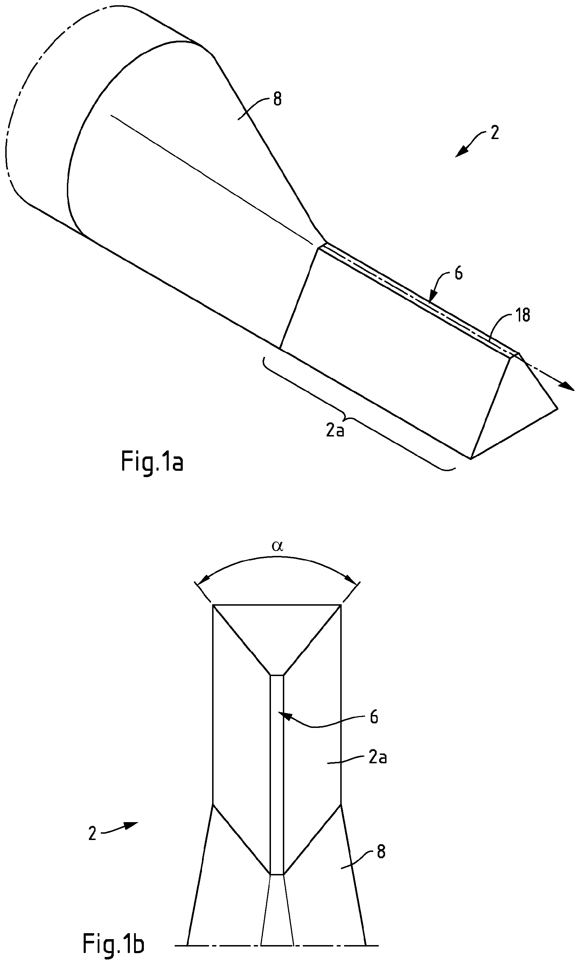

Fig 1a shows a schematic representation of a first embodiment of a carrier in a perspective view. The carrier 2 is formed from two parts: the heat sink body portion 8 and the mounting portion 6, which is provided at present on top of a nose 2a of the carrier 2. The nose 2a and the heat sink body portion 8 are thermally coupled to each other. The nose 2a is in a V-shaped form, thus comprises a triangular cross section. The mounting portion 6 has an arrangement direction 18. One or more lighting modules 4 can be arranged along the arrangement direction 18, in particular on a structure 16 which is thermally coupled to the mounting portion 6.

Fig. 1b shows the schematic representation of Fig 1a in a front view. It can be seen that the nose 2a comprising the mounting portion 6 shadows emitted light from the one or more lighting modules 4 over an angle α, of e.g. 58°, due to the V-shaped form of the carrier 2 in the region of the nose 2a. The nose 2a is a truncated nose shadowing a limited angular range.

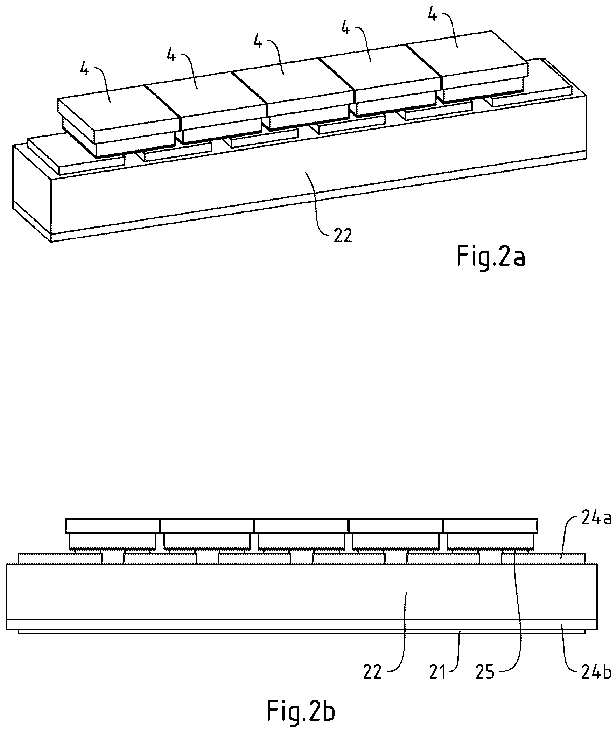

Fig. 2a shows, in a perspective view, a schematic representation of a structure to be mounted as part of a lighting device 12 of a second embodiment not covered by the claims. The ceramic substrate 22 is for instance a ceramic DBC (Direct bonded copper) substrate. The copper is represented by a routing layer attached to the ceramic substrate 22. The routing layer is divided into several contact sections enabling one or more lighting modules 4 to be mounted to the ceramic substrate 22. The lighting modules 4 are connected in series via the contact sections.

Fig. 2b shows the schematic representation of Fig 2a in a side view. The ceramic substrate 22 comprises a top routing layer 24a on its top, connected by solder attaches 25 to the lighting modules 4, and further comprises another bottom routing layer 24b on its bottom. Both routing layers 24a and 24b are made of copper, in particular it is copper bonded to the ceramic substrate 22. The ceramic substrate 22 comprises a thermal interface 21 that is thermally conductive, e.g. to be thermally coupled to the mounting portion 6 of the carrier 2. It will be understood that in the embodiment shown in Fig. 2b, lighting modules are not to be attached to the bottom routing layer 24b.

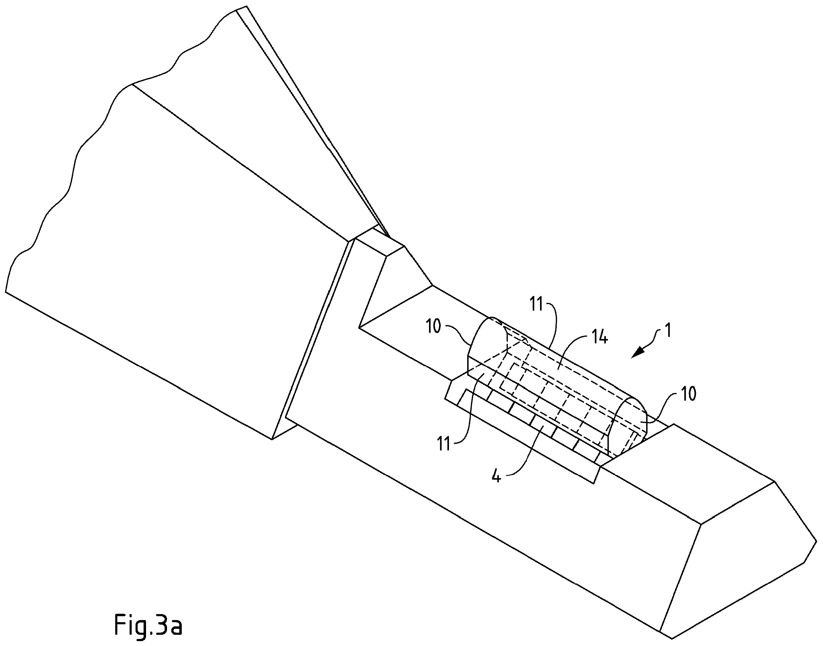

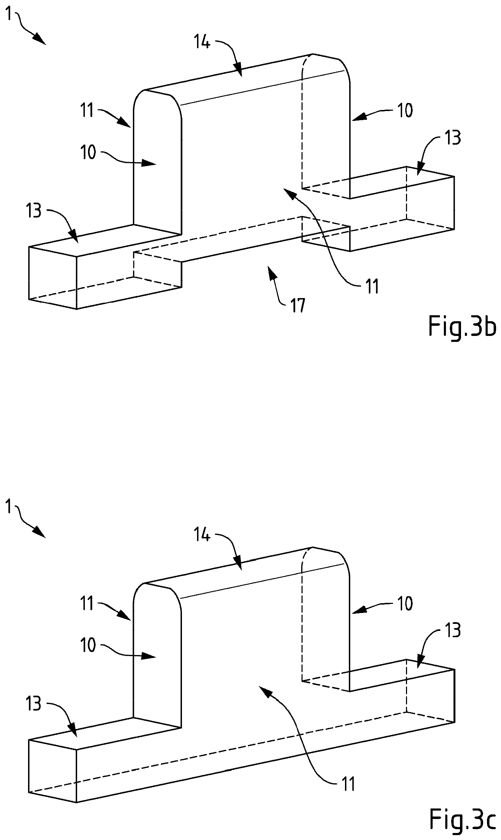

Figs. 3a-c show schematic representations of embodiments of a light guide in perspective views. The light guides in Figs. 3a to 3c each have two transmissive side surfaces 10 and two scattering side surfaces 11.The light guides in Figs. 3b and 3c each have two extensions 13 for aligning the respective light guide 1 to the structure 16 and fixing the light guide 1 to carrier 2. The light guide 1 of Fig. 3a has a top surface 14 which comprises a single parabolically shaped part. The light guide 1 of Fig. 3b has a top surface 14 which comprises two parabolic cylinder shaped parts and a flat part arranged between the two parabolic cylinder shaped parts. The light guide 1 of Fig. 3c has a fully parabolic cylinder shaped top surface. The light guide 1 of Fig. 3b has one cut out 17, which on the one hand can serve to align the light guide to a lighting module, which in at least one dimension fits into the cut out and on the other hand to provide an air gap 15 between a lighting module 4 and the light guide 1, when the light guide 1 is optically coupled to a lighting module 4.

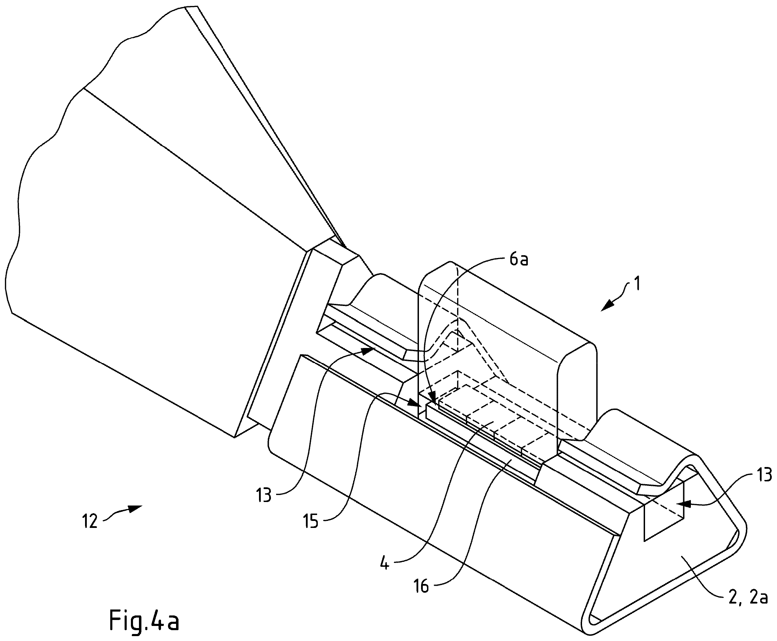

Fig. 4a shows a schematic representation of an embodiment of a lighting device not covered by the claims 12 in a perspective view, wherein the embodiment of the light guide 1 from Fig. 3b is optically coupled to the four lighting modules 4 received by a mounting face 6a of structure 16. The cut off 17 of light guide 1 in between the two extensions 13 houses the structure 16 and the lighting modules 4 so that the light guide 1 is properly aligned to the structure 16 and the lighting modules 4. The light guide 1 is fixed to the carrier 2, in particular to a part of the nose 2a, by a clamping device 34 made from a 300µm thick metal sheet. The one clamping device 34 clamps both extensions 13, such that a mechanical connection between the light guide 1 and the structure 16 is provided. The clamping device 34 conforms to the shape of the carrier 2 and heat-sink nose 2a to avoid shadowing effects. The clamping device 34 is mechanically connected to the carrier 2 by means of clamping.

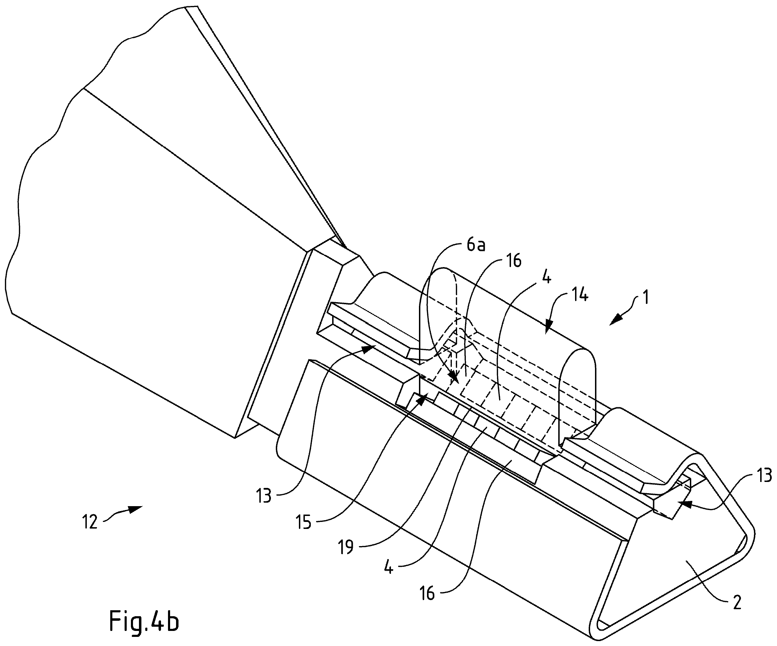

Fig. 4b shows a schematic representation of another embodiment of a lighting device in a perspective view. Two structures 16 having four lighting modules 4 each are mounted in a receptacle of the carrier 2, so that the lighting modules 4 of one of the two structures 16 with the lighting modules of the other structure 16 enclosing an angle of around 90° between the planes defined by their respective top surfaces. The top surface 14 of the light guide 1 has a parabolic cylinder shape with respect to the arrangement direction 18. The bottom surface 19 of the light guide 1 has a shape resulting from the bottom part of the light guide 1 resembling a polygon, so that respective sides of the polygonal shape face each of the at least two lighting modules 4. In this case the bottom part of the light guide 1 is formed as a wedge enclosing an angle of around 90°. Further, each of the two extensions 13 in cross section partly has a V-shape, with the carrier 2 having a respective matching inverse V-shape, such that alignment of the light guide 1 is enhanced.

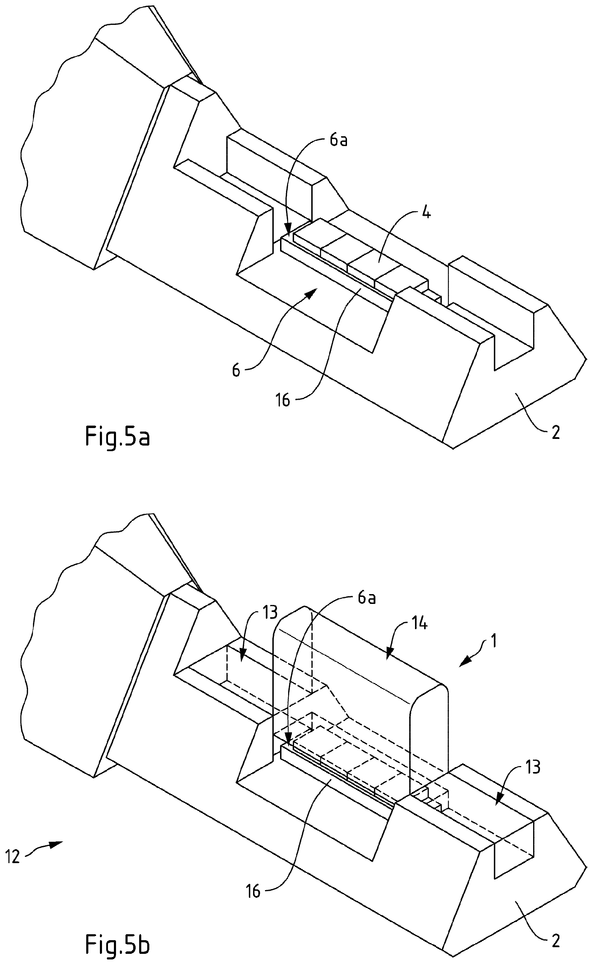

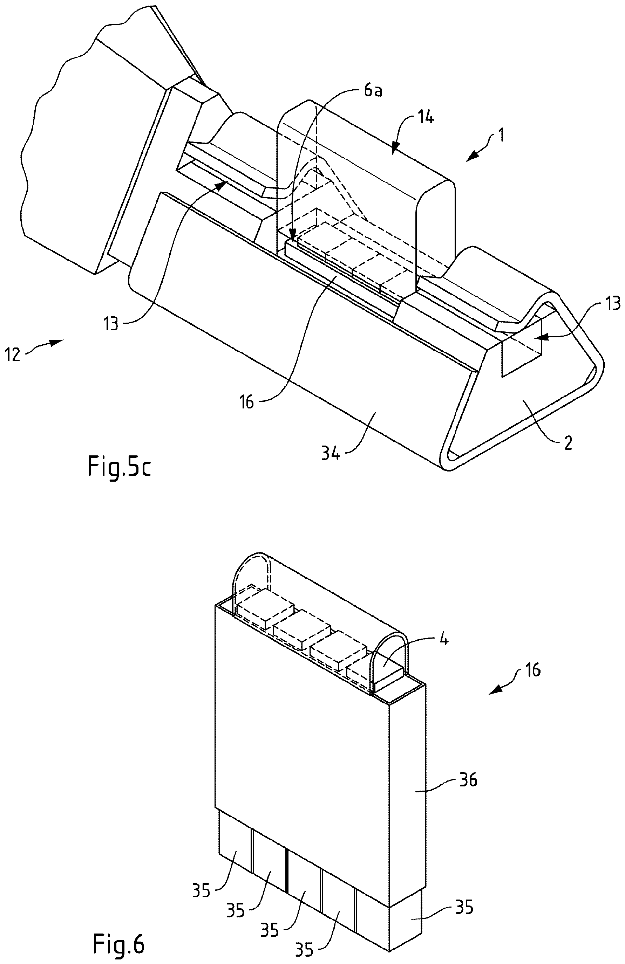

Fig. 5a-c show schematically the method of production of an embodiment of a lighting device not covered by the claims in a perspective view. The carrier 2 has a triangular cross section in sections. The mounting portion 6 is arranged on an edge of the triangular cross section. In Fig. 5a a structure 16 is mounted in the mounting portion 6 and four lighting modules 4 are arranged along the arrangement direction of the mounting face 6a to structure 16. In Fig. 5b the light guide 1 is optically coupled to the lighting modules 4 by mounting it on the carrier 2 inside a respective receptacle. It is aligned using receptacles for the extensions 13 in the carrier 2. In Fig. 5c the light guide is fixed by clamping the light guide 1 via the extensions 13 and a clamping device 34.

Fig. 6 shows a schematic representation of a structure 16 having five heat fingers 35. The five heat fingers 35 are glued together using a silicone glue to provide electrical insulation. The five heat fingers are surrounded by silicone layer 36 to prevent electrical shortcuts via the heat sink 2.

### REFERENCE SIGNS:

- 1: light guide
- 2: carrier
- 2a: nose
- 4: lighting module
- 6: mounting portion
- 6a: mounting face
- 8: heat sink body portion
- 10: transmissive side surface
- 11: scattering side surface
- 12: lighting device
- 13: extension
- 14: top surface
- 15: air gap
- 16: structure
- 17: cut out
- 18: arrangement direction
- 19: bottom surface
- 21: thermal interface
- 22: ceramic substrate
- 24a: top routing layer
- 24b: bottom routing layer
- 25: solder attach
- 34: clamping device
- 35: heat finger
- 36: silicone layer
- α: opening angle

## Claims

1. A lighting device (12), comprising:
- a carrier (2) for at least one lighting module (4) comprising at least one mounting portion (6) for receiving of at least one structure (16), wherein the carrier (2) has a triangular cross section at least in sections with the at least one mounting portion (6) being arranged on an edge of the triangular cross section; and a heat sink body portion (8) arranged adjacent to the at least one mounting portion (6), wherein the heat sink body portion (8) protrudes sidewards from the at least one mounting portion (6); and
- wherein the at least one structure (16) is mounted to the at least one mounting portion (6),
- wherein the at least one structure (16) comprises at least one mounting face (6a) for receiving the at least one lighting module (4),
- wherein the at least one mounting face (6a) has an arrangement direction (18) and is configured for the at least one lighting module (4) to be arranged along the arrangement direction (18);
- the at least one lighting module (4) being mounted along the arrangement direction (18) on the at least one mounting face (6a); and
- at least one light guide (1) optically coupled to the at least one lighting module (4);
**characterised in that**:
the at least one structure (16) has at least partly a concave or inwardly recessed cross section, wherein the at least one mounting face (6a) corresponds at least partly to a surface area of the at least one structure (16) having the concave or inwardly recessed cross section, and at least two lighting modules (4) are mounted on the at least one mounting face (6a) at least partly facing each other.

2. The lighting device (12) as claimed in claim 1, wherein the at least two lighting modules (4) are mounted on the at least one mounting face (6a) enclosing an angle of at least 30° and at most 135° between the planes defined by their respective top surfaces.

3. The lighting device (12) as claimed in claim 1, wherein the at least one light guide (1) has at least two scattering side surfaces (11), which are configured to cause at least 90% diffuse scattering of incoming light, and at least two transmissive side surfaces (10), which are configured to allow at least 70% transmission of incoming light.

4. The lighting device (12) as claimed in claim 3, wherein the at least one light guide (1) has at least one top surface (14), wherein the at least one top surface (14) has at least partly a parabolic cylinder shape with respect to the arrangement direction (18).

5. The lighting device (12) as claimed in claim 1, wherein the at least one light guide (1) has at least one extension (13) for aligning the at least light guide (1) to the at least one structure (16).

6. The lighting device (12) as claimed in claim 1, wherein the at least one light guide (1) comprises glass or silicone.

7. The lighting device (12) as claimed in claim 1, wherein at least one air gap (15) is present between the at least one light guide (1) and the at least one lighting module (4).

8. The lighting device (12) as claimed in claim 1, wherein the at least one structure (16) comprises a ceramic substrate (22) for receiving the at least one lighting module (4), the ceramic substrate (22) comprising on at least one side a routing layer (24a, 24b) for electrical coupling of the at least one lighting module (4).

9. A method for producing the lighting device (12) as claimed in any one of claims 1 to 8, the method comprising:
- providing the carrier (2) for the at least one lighting module (4) comprising the at least one mounting portion (6) for receiving the at least one structure (16), wherein the carrier (2) has a triangular cross section at least in sections with the at least one mounting portion (6) being arranged on the edge of the triangular cross section; and the heat sink body portion (8) arranged adjacent to the at least one mounting portion (6), wherein the heat sink body portion (8) protrudes sidewards from the at least one mounting portion (6);
- forming or mounting the at least one structure (16) to the at least one mounting portion (6) of the carrier (2), wherein the at least one structure (16) comprises the at least one mounting face (6a) and is thermally coupled to the at least one mounting portion (6);
- mounting the at least one lighting module (4) along the arrangement direction (18) of the at least one mounting face (6a) to the at least one structure (16); and
- optically coupling the at least one light guide (1) to the at least one lighting module (4).

10. The method as claimed in claim 9, wherein the at least one light guide (1) has at least one extension (13) for aligning the at least light guide (1) to the at least one structure (16), and the at least one light guide (1) is fixed to the carrier (2) at least partly by means of the at least one extension (11).

11. The method as claimed in claim 9 or 10, further comprising:
- creating or forming at least two scattering side surfaces (11) on the at least one light guide (1) by means of sand blasting, roughening, or scatter coating.

12. The method as claimed in claim 9 or 10, further comprising:
- creating at least two transmissive side surfaces (10) on the at least one light guide (1) by coating the at least two transmissive side surfaces (10) with a metal coating.

13. The method as claimed in claim 9 or 10, further comprising:
- forming on the at least one light guide (1) at least one top surface (14) having a parabolic cylinder shape with respect to the arrangement direction (18), wherein the at least one top surface (14) of the at least one light guide (1) is formed by means of sand blasting, roughening, or scatter coating.

14. An automotive exterior light comprising the lighting device (12) as claimed in any one of claims 1 to 8.

## Patentansprüche

1. Beleuchtungsvorrichtung (12) mit:
- einem Träger (2) für mindestens ein Beleuchtungsmodul (4) mit mindestens einem Montagebereich (6) zum Aufnehmen mindestens einer Struktur (16), wobei der Träger (2) zumindest abschnittsweise einen dreieckigen Querschnitt aufweist, wobei der mindestens eine Montagebereich (6) an einem Rand des dreieckigen Querschnitts angeordnet ist, und einem Kühlkörperbereich (8), der dem mindestens einen Montagebereich (6) benachbart angeordnet ist, wobei der Kühlkörperbereich (8) seitwärts von dem mindestens einen Montagebereich (6) absteht; und
- wobei die mindestens eine Struktur (16) an dem mindestens einen Montagebereich (6) angebracht ist,
- wobei die mindestens eine Struktur (16) mindestens eine Montagefläche (6a) zum Aufnehmen des mindestens einen Beleuchtungsmoduls (4) aufweist,
- wobei die mindestens eine Montagefläche (6a) eine Anordnungsrichtung (18) aufweist und zur Anordnung des mindestens einen Beleuchtungsmoduls (4) entlang der Anordnungsrichtung (18) ausgebildet ist,
- wobei das mindestens eine Beleuchtungsmodul (4) entlang der Anordnungsrichtung (18) auf der mindestens einen Montagefläche (6a) angebracht ist, und
- mindestens einem Lichtleiter (1), der optisch mit dem mindestens einen Beleuchtungsmodul (4) gekoppelt ist,
**dadurch gekennzeichnet,**
**dass** die mindestens eine Struktur (16) zumindest teilweise einen konkaven oder nach innen ausgenommenen Querschnitt aufweist, wobei die mindestens eine Montagefläche (6a) zumindest teilweise einer Fläche der mindestens einen Struktur (16) entspricht, welche den konkaven oder nach innen ausgenommenen Querschnitt aufweist, und mindestens zwei Beleuchtungsmodule (4) auf der mindestens einen Montagefläche (6a) einander zumindest teilweise zugewandt angebracht sind.

2. Beleuchtungsvorrichtung (12) nach Anspruch 1, bei welcher die mindestens zwei Beleuchtungsmodule (4) auf der mindestens einen Montagefläche (6a) unter Einschluss eines Winkels von mindestens 30° und höchstens 135° zwischen den durch ihre jeweiligen Oberseiten definierten Ebenen angebracht sind.

3. Beleuchtungsvorrichtung (12) nach Anspruch 1, bei welcher der mindestens eine Lichtleiter (1) mindestens zwei streuende Seitenflächen (11) aufweist, die dazu ausgebildet sind, eine diffuse Streuung des einfallenden Lichts von mindestens 90% zu bewirken, und mindestens zwei transmissive Seitenflächen (10) aufweist, die dazu ausgebildet sind, eine Transmission des einfallenden Lichts von mindestens 70% zu ermöglichen.

4. Beleuchtungsvorrichtung (12) nach Anspruch 3, bei welcher der mindestens eine Lichtleiter (1) mindestens eine Oberseite (14) aufweist, wobei die mindestens eine Oberseite (14) in Bezug auf die Anordnungsrichtung (18) zumindest teilweise eine parabolische Zylinderform aufweist.

5. Beleuchtungsvorrichtung (12) nach Anspruch 1, bei welcher der mindestens eine Lichtleiter (1) mindestens eine Verlängerung (13) aufweist, um den mindestens einen Lichtleiter (1) mit der mindestens einen Struktur (16) auszurichten.

6. Beleuchtungsvorrichtung (12) nach Anspruch 1, bei welcher der mindestens eine Lichtleiter (1) Glas oder Silikon aufweist.

7. Beleuchtungsvorrichtung (12) nach Anspruch 1, bei welcher mindestens ein Luftspalt (15) zwischen dem mindestens einen Lichtleiter (1) und dem mindestens einen Beleuchtungsmodul (4) vorhanden ist.

8. Beleuchtungsvorrichtung (12) nach Anspruch 1, bei welcher die mindestens eine Struktur (16) ein Keramiksubstrat (22) zum Aufnehmen des mindestens einen Beleuchtungsmoduls (4) aufweist, wobei das Keramiksubstrat (22) auf mindestens einer Seite eine Routing-Schicht (24a, 24b) zum elektrischen Verbinden des mindestens einen Beleuchtungsmoduls (4) aufweist.

9. Verfahren zur Herstellung der Beleuchtungsvorrichtung (12) nach einem der Ansprüche 1 bis 8, wobei das Verfahren die folgenden Schritte aufweist:
- Bereitstellen des Trägers (2) für das mindestens eine Beleuchtungsmodul (4) mit dem mindestens einen Montagebereich (6) zum Aufnehmen der mindestens einen Struktur (16), wobei der Träger (2) zumindest abschnittsweise einen dreieckigen Querschnitt aufweist, wobei der mindestens eine Montagebereich (6) an einem Rand des dreieckigen Querschnitts angeordnet ist, und des Kühlkörperbereichs (8), der dem mindestens einen Montagebereich (6) benachbart angeordnet ist, wobei der Kühlkörperbereich (8) seitwärts von dem mindestens einen Montagebereich (6) absteht;
- Formen oder Befestigen der mindestens einen Struktur (16) an dem mindestens einen Montagebereich (6) des Trägers (2), wobei die mindestens eine Struktur (16) die mindestens eine Montagefläche (6a) aufweist und thermisch mit dem mindestens einen Montagebereich (6) gekoppelt ist;
- Befestigen des mindestens einen Beleuchtungsmoduls (4) an der mindestens einen Struktur (16) entlang der Anordnungsrichtung (18) der mindestens einen Montagefläche (6a); und
- optisches Koppeln des mindestens einen Lichtleiters (1) mit dem mindestens einen Beleuchtungsmodul (4).

10. Verfahren nach Anspruch 9, bei welchem der mindestens eine Lichtleiter (1) mindestens eine Verlängerung (13) zum Ausrichten des mindestens einen Lichtleiters (1) mit der mindestens einen Struktur (16) aufweist, und der mindestens eine Lichtleiter (1) an dem Träger (2) zumindest teilweise mittels des mindestens einen Verlängerung (13) befestigt wird.

11. Verfahren nach Anspruch 9 oder 10, ferner mit dem Schritt:
- Bilden oder Formen mindestens zweier streuender Seitenflächen (11) an dem mindestens einen Lichtleiter (1) durch Sandstrahlen, Aufrauen oder Streubeschichten.

12. Verfahren nach Anspruch 9 oder 10, ferner mit dem Schritt:
- Bilden mindestens zweier durchlässiger Seitenflächen (10) an dem mindestens einen Lichtleiter (1) durch Beschichten der mindestens zwei durchlässigen Seitenflächen (10) mit einer Metallbeschichtung.

13. Verfahren nach Anspruch 9 oder 10, ferner mit dem Schritt:
- Ausbilden mindestens einer Oberseite (14) des mindestens einen Lichtleiters (1) mit einer parabolischen Zylinderfläche in Bezug auf die Anordnungsrichtung (18), wobei die mindestens eine Oberseite (14) des mindestens einen Lichtleiters (1) mittels Sandstrahlen, Aufrauen oder Streubeschichten gebildet wird.

14. Kraftfahrzeugaußenleuchte mit der Beleuchtungsvorrichtung (12) nach einem der Ansprüche 1 bis 8.

## Revendications

1. Dispositif d'éclairage (12), comprenant :
- un support (2) pour au moins un module d'éclairage (4) comprenant au moins une partie de montage (6) permettant de recevoir au moins une structure (16), le support (2) ayant une section transversale triangulaire au moins dans des sections avec l'au moins une partie de montage (6) étant agencée sur un bord de la section transversale triangulaire ; et une partie de corps de dissipation thermique (8) agencée adjacente à l'au moins une partie de montage (6), la partie de corps de dissipation thermique (8) faisant saillie latéralement à partir de l'au moins une partie de montage (6) ; et
- dans lequel l'au moins une structure (16) est montée sur l'au moins une partie de montage (6),
- dans lequel l'au moins une structure (16) comprend au moins une face de montage (6a) permettant de recevoir l'au moins un module d'éclairage (4),
- dans lequel l'au moins une face de montage (6a) a une direction d'agencement (18) et est conçue pour permettre à l'au moins un module d'éclairage (4) d'être agencé le long de la direction d'agencement (18) ;
- l'au moins un module d'éclairage (4) étant monté le long de la direction d'agencement (18) sur l'au moins une face de montage (6a) ; et
- au moins un guide de lumière (1) couplé optiquement à l'au moins un module d'éclairage (4) ;
**caractérisé en ce que :**
l'au moins une structure (16) a au moins partiellement une section transversale concave ou en retrait vers l'intérieur, l'au moins une face de montage (6a) correspondant au moins partiellement à une zone superficielle de l'au moins une structure (16) ayant la section transversale concave ou en retrait vers l'intérieur, et au moins deux modules d'éclairage (4) sont montés sur l'au moins une face de montage (6a) au moins partiellement l'un en face de l'autre.

2. Dispositif d'éclairage (12) selon la revendication 1, dans lequel les au moins deux modules d'éclairage (4) sont montés sur l'au moins une face de montage (6a) entourant un angle d'au moins 30° et d'au plus 135° entre les plans définis par leurs surfaces supérieures respectives.

3. Dispositif d'éclairage (12) selon la revendication 1, dans lequel l'au moins un guide de lumière (1) a au moins deux surfaces latérales de diffusion (11), qui sont conçues pour amener une diffusion diffuse d'au moins 90 % de lumière entrante, et au moins deux surfaces latérales transmissives (10), qui sont conçues pour permettre une transmission d'au moins 70 % de lumière entrante.

4. Dispositif d'éclairage (12) selon la revendication 3, dans lequel l'au moins un guide de lumière (1) a au moins une surface supérieure (14), l'au moins une surface supérieure (14) ayant au moins partiellement une forme de cylindre parabolique par rapport à la direction d'agencement (18).

5. Dispositif d'éclairage (12) selon la revendication 1, dans lequel l'au moins un guide de lumière (1) a au moins une extension (13) permettant d'aligner l'au moins un guide de lumière (1) avec l'au moins une structure (16).

6. Dispositif d'éclairage (12) selon la revendication 1, dans lequel l'au moins un guide de lumière (1) comprend du verre ou de la silicone.

7. Dispositif d'éclairage (12) selon la revendication 1, dans lequel au moins un espace d'air (15) est présent entre l'au moins un guide de lumière (1) et l'au moins un module d'éclairage (4).

8. Dispositif d'éclairage (12) selon la revendication 1, dans lequel l'au moins une structure (16) comprend un substrat en céramique (22) permettant de recevoir l'au moins un module d'éclairage (4), le substrat en céramique (22) comprenant sur au moins un côté une couche d'interconnexion (24a, 24b) pour un couplage électrique de l'au moins un module d'éclairage (4).

9. Procédé permettant de produire le dispositif d'éclairage (12) selon l'une quelconque des revendications 1 à 8, le procédé comprenant :
- la fourniture du support (2) pour l'au moins un module d'éclairage (4) comprenant l'au moins une partie de montage (6) permettant de recevoir l'au moins une structure (16), le support (2) ayant une section transversale triangulaire au moins dans des sections avec l'au moins une partie de montage (6) étant agencée sur le bord de la section transversale triangulaire ; et la partie de corps de dissipation thermique (8) agencée adjacente à l'au moins une partie de montage (6), la partie de corps de dissipation thermique (8) faisant saillie latéralement à partir de l'au moins une partie de montage (6) ;
- la formation ou le support de l'au moins une structure (16) à l'au moins une partie de montage (6) du support (2), l'au moins une structure (16) comprenant l'au moins une face de montage (6a) et étant couplée thermiquement à l'au moins une partie de montage (6) ;
- le montage de l'au moins un module d'éclairage (4) le long de la direction d'agencement (18) de l'au moins une face de montage (6a) sur l'au moins une structure (16) ; et
- le couplage optique de l'au moins un guide de lumière (1) à l'au moins un module d'éclairage (4).

10. Procédé selon la revendication 9, dans lequel l'au moins un guide de lumière (1) a au moins une extension (13) permettant d'aligner l'au moins un guide de lumière (1) avec l'au moins une structure (16), et l'au moins un guide de lumière (1) est fixé au support (2) au moins partiellement au moyen de l'au moins une extension (11).

11. Procédé selon la revendication 9 ou 10, comprenant en outre :
- la création ou la formation d'au moins deux surfaces latérales de diffusion (11) sur l'au moins un guide de lumière (1) au moyen d'un sablage, d'une rugosification, ou d'un revêtement à diffusion.

12. Procédé selon la revendication 9 ou 10, comprenant en outre :
- la création d'au moins deux surfaces latérales transmissives (10) sur l'au moins un guide de lumière (1) en revêtant les au moins deux surfaces latérales transmissives (10) avec un revêtement métallique.

13. Procédé selon la revendication 9 ou 10, comprenant en outre :
- la formation sur l'au moins un guide de lumière (1) d'au moins une surface supérieure (14) ayant une forme de cylindre parabolique par rapport à la direction d'agencement (18), l'au moins une surface supérieure (14) de l'au moins un guide de lumière (1) étant formée au moyen d'un sablage, d'une rugosification, ou d'un revêtement à diffusion.

14. Éclairage extérieur automobile comprenant le dispositif d'éclairage (12) selon l'une quelconque des revendications 1 à 8.
